Europäisches Patentamt

European Patent Office

Office européen des brevets

(11) Publication number: **0 156 067**
**B1**

## (12) EUROPEAN PATENT SPECIFICATION

(45) Date of publication of patent specification: **15.06.88**

(21) Application number: **84307430.3**

(22) Date of filing: **29.10.84**

(51) Int. Cl.⁴: **F 16 H 1/28**

(54) Improvements in and relating to epicyclic assemblies.

(30) Priority: **22.03.84 JP 55500/84**

(43) Date of publication of application:
**02.10.85 Bulletin 85/40**

(45) Publication of the grant of the patent:
**15.06.88 Bulletin 88/24**

(84) Designated Contracting States:
**BE CH DE FR GB IT LI NL SE**

(56) References cited:
**EP-A-0 026 826**
**DE-B-2 032 723**
**DE-C- 444 697**
**GB-A- 240 518**
**GB-A-1 107 062**
**GB-A-2 125 927**
**US-A-3 330 171**
**US-A-4 095 488**

(73) Proprietor: **MATEX CO. LTD.**
**2-6, Obasecho Tennoji-ku**
**Osaka-shi Osaka (JP)**

(72) Inventor: **Matoba, Hideyasu**
**c/o Matex Co. Ltd. 2-6, Obasecho**
**Tennoji-ku Osaka-shi Osaka (JP)**

(74) Representative: **Evans, David Charles et al**
**F.J. CLEVELAND & COMPANY 40-43, Chancery**
**Lane**
**London, WC2A 1JQ (GB)**

Courier Press, Leamington Spa, England.

## Description

This invention relates to an epicyclic gear assembly and has particular reference to such gear assemblies which are capable of being more cheaply and readily constructed.

Epicyclic or planetary gear assemblies are used as decelerators or accelerators and are used as fine control devices in such, for example, as peristatic pumps and the like whereby careful control of speed, particularly slow speed, is necessary or desirable. They are also well known in their use in differentials.

Unlike many reduction gear systems, epicyclic gear assemblies have many enmeshment points between the various components of the assembly and in many cases the pressures acting or the torques transmitted at the meshing points and are not necessarily equal. A typical epicyclic gear assembly comprises a sun gear at the centre, three or four planetary gears mounted in a carrier and adapted to enmesh with and surround the sun gear, the carrier being capable of relative rotation with respect to the sun gear and an outer ring gear having inwardly directed teeth adapted to engage each of the planetary gears, the arrangement being such that the ring gear can be mounted in a stationary manner to allow differential torque transmission between the sun gear and the carrier on the one hand or the alternative, the ring gear can be driven to a greater or lesser extent to control the input/output speeds of the input/output shafts attached to either the sun gear or the carrier respectively.

In such an assembly the planetary gears free wheel. They are carried for rotation with respect to the carrier and do not have input and output shafts. Any tendency of the planetary gear to move in a radial direction is not usually suppressed by bearings. The carrier is supported usually on one side only by an input or output shaft and the sun gear is carried for rotation with the output or input shaft as the case may be. The planetary gears serve to rotate around the sun gear in roller enmeshing engagement between the sun gear on the one hand and the ring gear on the other to produce a reaction between the two which causes or allows the carrier carrying the planetary gears to rotate about the axis of the shaft attached thereto.

Any vibration or non-uniformity in the rotation of either the sun gear or the carrier will result in a change in the depth of enmeshment of the teeth of the planetary gear with the teeth of the sun gear and/or ring gear. When the finish of all the gears is accurate, this is not a problem, but when the gear surfaces are not finished accurately, such ill-finished gears tend to thrust one against the other to produce varying adherence thus causing an increase in the frictional force due to the changes in the depth of enmeshment of the various gears. This phenomena is often referred to as "teeth interference".

Because of the problem of finishing the gear surfaces to a high degree of accuracy, planetary or epicyclic gear trains tend to be noisy and the efficiency of torque transmission can be markedly reduced by only relatively small inaccuracies in the finish of the gears.

The machining of the gear teeth on all the components of an epicyclic gear train can be improved to a level whereby all these problems are overcome, the gears and carrier rotate smoothly.

As presently constructed, the gears and the teeth themselves are rigid and if there is even a slight inaccuracy between several points of enmeshment, the gears do not compensate for inequality of pressures generated by the inaccuracy in machining or shaping, and in order to achieve smooth operation, it is essential, currently, to control the limit of the inaccuracies in the machining of gears to within very fine limits. This results in a substantial increase in costs of production and tends to put epicyclic gear systems out of reach of many potential uses that are available for it.

It is clear, therefore, there is a demand for such epicyclic gear systems having efficiency and low noise, but in which the cost can be reduced by providing, for example, a less accurate machining or forming of the gear teeth in the individual components of the assembly.

It has been proposed to control the inter-enmeshment between the gears in an epicyclic gear train by using an assembly of the pitched disc ring type. In such an assembly one or two pitched discs are fitted on one or both sides of each planetary gear and one or two pitched rings are correspondingly mounted on one or both sides of the ring gear and/or the sun gear. The pitched disc carried by the planetary gear is adapted to be in roller contact with the pitch ring mounted by the side of the ring gear and the periphery of contact between the two is the same as the pitch circle of the gears themselves. The pitched disc of the planetary gears contact and roll on the pitched rings of the ring gear and because of the rolling contact between the disc and the ring, no torque is transmitted as a result of this contact. It does, however, provide face to face pressure and limits and/or controls the depth of engagement by the teeth of the planetary gear and the ring gear. Thus, deep teeth interference is obviated with a corresponding reduction in noise and in inefficiency of the gear transmission.

Systems of this type have been disclosed in United States Patent Specification No. 3,293,928 and 3,548,673. These two specifications disclose gear assemblies having pitched discs in general and pitch rings mounted on one or both sides of the gears. They do not, however, relate to the particular problem of a planetary gear assembly. The essential teaching of these documents is that the linear velocity of a peripheral point of a pitched disc on the one hand has to be identical with the linear velocity of the surface upon which it rolls on the other. No slippage must occur between pitched disc and pitched ring at the contact point otherwise there will be a tendency for the transmission of torque between one and the other.

Epicyclic gear assemblies having pitched rollers and a pitched cylinder has been disclosed in Japanese Utility Model Publication No. 16918/55. The planetary gears and the outer ring gear each have pitched rollers and a pitched cylinder on one side only. The rollers on the planetary gears contact a cylindrical track on the side of the ring gear. Japanese Patent Publication No. 17111/79 discloses an epicyclic or planetary gear assembly having pitched disc and a corresponding pitch ring on both sides. It has also been proposed to provide a disc or roller assembly utilizing elastic discs.

As is appreciated, in an epicyclic or planetary gear assembly, several points of enmeshment may interfere one with another. One or two engagements may counteract the normal rotation and these adjustments being about inequality of pressure and thus give rise to deeper enmeshment of the gears, more noise and less efficiency. A typical epicyclic gear assembly has three or four planetary gears and it will be appreciated from the foregoing that different strengths of pressures as a result of interference between improperly formed gear teeth may act within the assembly as a whole. If, as has also been proposed, the planetary gears themselves are elastic, they can transform according to the strength of the pressure acting thereupon. The pressure differences can be alleviated in this way, but they cannot be equalised, since the elastic gears merely themselves deform and introduce or redistribute pressure among the other components of the assembly.

In Japanese Utility Model Publication No. 25692/69 there is disclosed a planetary friction roller assembly in which the rollers themselves are made from rubber. They can deform from a circular to an ellipsoidal shape according to the force acting thereupon. Such a deformation tends to equalise the torques and pressures of engagement at all points. Because of the occurrence of slipping, however, such an arrangement is unable to transmit strong torque.

Japanese Utility Model Publication No. 17538/60 and Japanese Patent Publication No. 22661/61 both disclose planetary gear assemblies in which the planetary gears consist of two parts. Each planetary gear has a gear portion and an intermediate wheel. A planetary shaft penetrates the centre hole of the intermediate wheel and of the gear member and there is clearance between the gear member and said intermediate wheel so that one may rotate relative to the other. Thus, the gear member can be displaced in a radial direction and in a tangential direction as a result of a clearance between the two. The displacement of the gear member will tend to absorb imperfections and maladjustments between three or four planetary gears in an epicyclic gear train, but this arrangement has no effect when the sun gear is carried by a shaft and the carrier is carried by a second shaft each of which is supported rigidly in bearings, since both the sun gear and the carrier cannot and do not displace radially with respect of the axis of rotation.

Japanese Patent Publication No. 17111/79 published on 27 June 1984 discloses an epicyclic gear assembly in which the planetary gears have thin elastic gear rings and pitched rollers, the outer ring gear has a pitched ring on which the pitched rollers roll. The planetary gear ring must be very thin in order to acquire enough elasticity and the specification specifically teaches that adequate thickness of a run part of the planetary gear is about 1 to $1\frac{1}{2}$ modules. Because the planetary gear member is extremely thin, it is easily broken or destroyed by excessive force. Accordingly such an assembly is only able to transmit very little torque and in practice is of little use in industry. It will be appreciated from the foregoing, therefore, that the general concept of limiting the enmeshment of imperfectly formed gears can be obtained by using roller elements associated with each planetary gear member adapted to engage with a roller contacting surfaces or pitch ring on the ring gear. The prior art has taught, however, that in any such arrangement the assembly must be constructed in such a way that the linear velocity of the periphery of the roller and rings must be exactly equal and the rollers and pitched rings with which they are in contact must have the same size of pitched circle corresponding to the pitch circle of the gears to which they are fitted.

For the purpose of this specification, it should be understood that the tooth edge or tooth edge circle means the circle on the circumference of which the extremity of each of the gear teeth lies for any given gear. A tooth root means the valley between neighbouring teeth in a gear and a tooth root circle means the circumference of the circle on which all the tooth roots lies for any given gear.

For any given gear, the tooth edge circle and the tooth root circles are concentric circles. The pitch circle lies between the two such that in a typical gear assembly, the tooth root circle is one and a quarter modules smaller in radius than the pitched circle and the tooth edge circle is one module larger in radius than the pitch circle of outer toother gear.

Thus, when a planetary gear with an associated disc is viewed from the side, if the disc has a radius corresponding to the radius of the pitch circle for that gear, half the tops of each of the teeth, namely one module of each tooth, projects radially outwardly from the extremity of the disc. When a planetary gear with a tooth edge circle disc is viewed from the side, no portion of the teeth can be viewed. Thus, it will be appreciated that when attempting to manufacture planetary gears, for example, having a pitch circle disc or roller types, it will be appreciated that it is not possible to manufacture these items as a single unit, since, of course, the circumferential edge of the associated roller will prevent access by the gear cutting machine to cut the gears. This will be equally true of cutting the gears on the associated ring gear, since the rolling cylindrical surface will again be on the pitched centre of the gear and not radially outwardly of the tooth roots and again machining of the ring gear teeth in particular becomes extremely expensive and/or well-nigh impossible.

The problem with the planetary gears can be overcome by providing a gear member and separate roller members, but this involves three components as opposed to one which then need to be mounted for rotation on a shaft and the accuracy of the machining·to achieve this and to ensure that the periphery of each roller lies on the pitched circle of the gear member again tends to increase the cost. The advantage gained to some extent by reducing the need for accurate machining of the gears themselves tends to be off-set by the need for accurate formation of the subsidiary components.

In GB—A—1107062 there is disclosed

An epicyclic gear assembly comprising

a sun gear,

a plurality of planetary gear members circumferentially spaced about said sun gear, each of which is in geared engagement therewith, and

carrier means for said planetary gear members and a ring gear in the form of an annulus having a ring of gear teeth on an inner circumferential surface thereof adapted to engage with each of said planetary gear members. All gear members are constructed with integral pitch circle diameter rolling surfaces.

The present applicant has considered the situation and takes the view that the conception that the rollers and the ring contacting surfaces in which they roll must have pitched circle peripheries need not be adhered to. The present applicants have realised that if the gear member is capable of relative rotation with respect to the rollers and the rollers themselves are used merely to limit the enmeshment of the gears, then there need not be any requirement to limit the periphery of the rollers and the surfaces on the associated components of an epicyclic gear assembly with which they contact specifically to a pitch circle configuration.

The present invention is therefore characterised in that each planetary gear member has a pair of roller elements which are separate from, and which rotate freely with respect to the planetary gear members, said elements being adapted to engage with a roller contacting surface on the sun gear and/or the ring gear to limit the depth of enmeshment between the teeth thereof and in that each roller element has a diameter not less than the tooth edge circle of the planetary gear member.

In a preferred embodiment of the present invention, the ring gear may have a pair of spaced roller contacting surfaces disposed one on each side of the ring of gear teeth, the diameter of each roller receiving surface not less than that of the tooth root circle of said ring of gear teeth. The sun gear may have a pair of spaced roller contacting surfaces disposed on each side of the gear teeth, the diameter of such surface being not more than that of the tooth root circle of the gear teeth on said sun gear. The diameter of each of the roller contacting surfaces of the ring gear may be substantially the same. The diameters of each of the roller contacting surfaces on the sun gear may be substantially identical. The radius of the roller elements associated with each planetary gear member may be 0 to 2 modules bigger than the radius of the tooth edge circle of the said planetary gear member. The radius of the roller contacting surfaces of the ring gear may each be 0 to 2 modules larger than the tooth root circle of the ring gear and furthermore, the radius of the roller contacting surfaces of the sun gear may be 0 to 2 modules smaller than the tooth root circle of said sun gear.

In a further aspect of the invention, the sun gear, the planetary gear members, the associated roller elements may all be made from sintered alloy and the carrier means may be made by aluminium dye-casting while the ring gear member may be produced in a plastics material by injection moulding methods. Alternatively, the sun gear, planetary gear members, the rollers associated with said planetary gear members and the ring gear may be made from a plastics material. In a further embodiment of the invention the sun gear, the planetary gear members, the ring gear and the carrier may each be made from a metal.

In a preferred embodiment of the invention, each planetary member is generally cylindrical in form and each associated roller member has a boss portion which is accommodated with said cylindrical planetary gear so that the roller members carry said gear member either for rotation therewith or for rotation relative thereto.

It will be appreciated by the man skilled in art that the assembly in accordance with the present invention will provide a rolling arrangement between sun gear, planetary gears and ring gears which will limit the enmeshment of gears and thus result in a reduction of noise and will permit less accurate machining of the gears of each of the traditional components of an epicyclic gear change. Since the rollers associated with the planetary gears have a periphery which is not less than the tooth edge circle of the planetary gear and the roller members may be formed separately from the gear members, then the machining of the gears themselves will not present difficulty. The relative free wheeling of the rollers while possibly producing some slippage, will tend to take up most of the difference in peripheral velocities of the roller surfaces and roller receiving surface, it will be appreciated that if some backlash or operating clearance is provided between the rollers and the cooperating members of the gear assembly is provided, then some slippage will be acceptable. In accordance with the invention it has been found that the transmission efficiency is higher than with the usual planetary gear assembly without side discs and that the cost of production is less because of the reduced requirement for accurate machining of the teeth while the cost of production is considerably less than with the prior art type of pitched circle disc type assemblies. Following is a description by way of example only and with reference to the accompanying drawings of methods of carrying the invention into effect.

In the drawings:—

Figure 1 is a front view of a planetary gear assembly in accordance with the present invention.

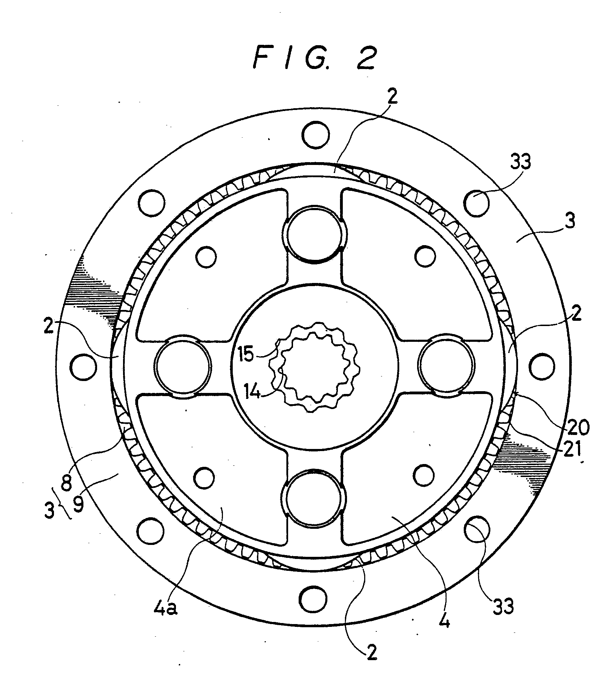

Figure 2 is a rear view of the planetary gear assembly of Figure 1.

Figure 3 is a section along the line 3—3 in Figure 1.

Figure 4 is an enlarged sectional view of the upper half of Figure 3.

Figure 5 is a front view of a sun gear in the assembly in Figure 1.

Figure 6 is a side view of the sun gear of Figure 5.

Figure 7 is a rear view of another embodiment of the invention showing the modifications to the carrier plate.

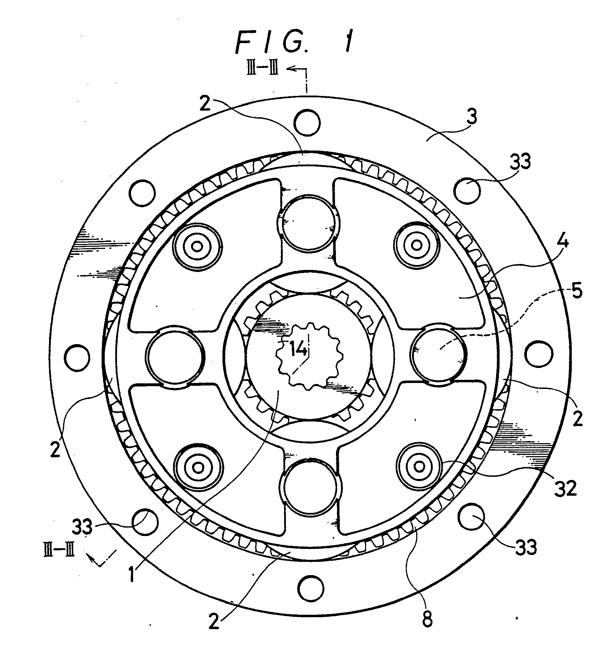

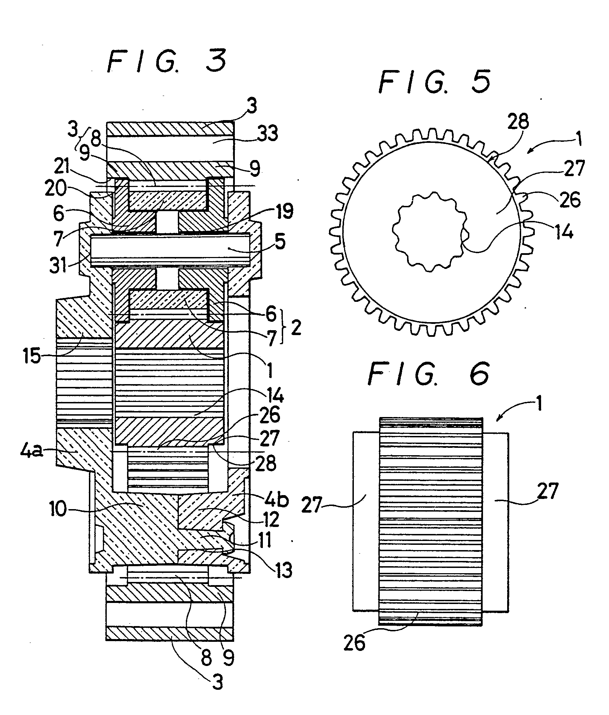

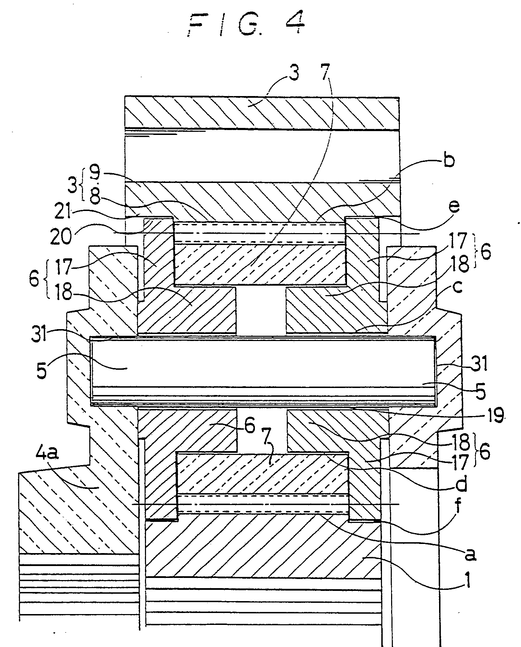

Referring first to Figure 1, the epicyclic planetary gear assembly shown therein comprises a sun gear 1 having a generally cylindrical outer surface with a plurality of radially extending teeth 26 (see Figure 5). The sun gear is provided with a central splined bore 14 adapted to be mounted on a shaft for rotation therewith thereby allowing transmission of torque from the shaft to the gear assembly as a whole via gear teeth 26. Each side of the sun gear 1 is provided with a cylindrical portion 27 having an outer circumference less than the tooth root circle of the gears 26.

The sun gear and its associated shaft are mounted in a bearing (not shown) and the sun gear is surrounded by four planetary gears 2 circumferentially spaced thereabout. Each planetary gear 2 comprises a central cylindrical member 7 having a plurality of gear teeth thereabout. The cylindrical gear member 7 is carried for rotation on a pair of roller disc members 6 each of which comprises an outer disc portion 17 with an axially extending boss portion 18 adapted to extend within the cylindrical gear member 7 as shown in Figure 4. The outer circumference of each roller member 6 is selected such that it is equal to or greater than the tooth edge circle of gear member 7. Each cylindrical gear member and its associated rollers are mounted for rotation upon a planetary shaft 5 mounted in a carrier (4) therefor, formed by the main carrier disc 4a having a substantially central bore adapted to receive a carrier shaft and a sub-carrier disc 4b which is readily fixed to the first part by means of plug part 11 engaging in a socket 13 during assembly. The arrangement being such that gear member 7 is enmeshed with the gears of sun gear 1 as shown in Figures 3 and 4.

The assembly is surrounded by an annular gear member indicated generally at 3 having a plurality of through bores 33 for securing to a case, said annular ring members 3 having on its inner cylindrical surface 9, a plurality of gear teeth 8 which engage with the teeth of each of the planetary gears 2. The part of the annular ring member 3 juxtaposed the gear teeth on each side of the inner portion is cut away to provide an annular rolling surface 21 adapted to abut with the peripheral extremity of roller 6. At the same time the peripheral extremity of roller 6 abuts with and engages the cylindrical portion 27 of sun gear 1, the arrangement being such that the roller 6 controls the degree of enmeshments between the teeth 8 of annular ring member 3 and the teeth of planetary gear member 2, and between the teeth of planetary gears 2 and the teeth of sun gear 1. Correspondingly the teeth 26 of sun gear 1 and teeth of gear member 7 are similarly arranged, the arrangement being such that on rotation of the sun gear 1 with the annular ring member 3 fixed to a housing, the planetary gear members 2 are caused to rotate about the sun gear thereby causing rotation of the carrier bore 15 and a shaft associated therewith.

The annular ring gear 3 may be made from a plastic or a sintered alloy and in these cases the annular gear 3 can be produced by a moulding process. The carrier 4 consists of a main carrier disc 4a and a sub carrier disc 4b which can be made from plastics, aluminium or steel. The carrier 4 is made, for example, of steel (chromium molybdenum steel is preferred) and the two steel discs 4a and 4b may be coupled together with rivets. Where a carrier 4 is made of a plastics material, main carrier disc 4a and sub carrier disc 4b may both be produced by injection moulding and are coupled to each other. In a further embodiment of the invention the carrier disc 4a and 4b may be produced from aluminum from die casting.

The securing of carrier discs 4a and 4b may be effected by means of providing a flange portion 10 which has a plug part 11, projecting therefrom, a corresponding flange portion 12 then has a socket 13. The plug part 11 is then inserted into the socket 13 and the end of the plug part 11 projecting from the socket 13 is deformed by means of a hammer or the like to rivet the two parts together. The deformed end thus serves to couple the main carrier disc 4a to the sub carrier disc 4b to form a unitary body.

Where the carrier 4 is formed of a plastics material the securing together of the components may be effected by ultrasonic welding or by adhesion using a suitable adhesive or a snap fitting as may be appropriate.

The sun gear 1 may be made from plastics, sintered alloys or steel and in the case of a plastics material the sun gear 1 and its associated components may be produced by injection moulding.

The planetary gear as well as the rollers associated therewith may also be made from either a plastics material, sintered alloys or from metals.

As will be appreciated from the foregoing, the relationship between the backlashes and clearances within the assembly will be apparent from the alliteration on Figure 4. The backlash between sun gear 1 and planetary gear 2 at the point of engagement is denoted by "a", while the backlash between the planetary gear 2 and the annular ring gear 3 is denoted by "b". The greatest value of the clearance between the planetary shaft 5 and the bore 19 in planetary roller 6 is denoted by "c". The greatest value of the clearance between the inner surface of a cylindrical gear 7 and the boss 18 of roller disc 6 is denoted by "d". The clearance between the outer rolling surface 21 of annular ring gear 3 and periphery of roller 6 is denoted by "e", while the clearance between the circumference of roller 6 and a cylindrical surface 28 on sun gear 1 is denoted by "f". The clearances "c" and "d" may be defined as the diameter of the relevant inner surface minus the diameter of the relevant outer surface and they are equal to the greatest values of permissable clearances.

In the particular embodiment illustrated in the accompanying drawings:—

A module is 0.75 (millimetre) in this example. The numbers of teeth of the sun gear, the planetary gear and the outer inner-toothed gear are 36, 20 and 76 respectively. A range of clearances for "c" and "d" are:—

$$"c" = 0.05—0.1 \text{ mm}$$

$$"d" = 0.04—0.1 \text{ mm}$$

The backlashes "a" and "b" are defined by the gap from a tooth top of a gear and to a tooth bottom of another gear at the point of engagement under the conditions that the planetary shafts 5 are fixed at the exact positions and the planetary rollers 6 and the outer inner-cylindrical part 9 are finished without significant error.

In the same embodiment, the backlash "a" between the sun gear and the planetary gear and the backlash "b" between the planetary gear and the outer inner-toothed gear are given by

$$"a" = 0.295—0.245 \text{ mm}$$

$$"b" = 0.35—0.25 \text{ mm}$$

Similarly the clearances between the rolling circumferences are defined under the condition that all the components are fixed at the exact positions. In the same embodiment the optimum ranges of the clearances are

$$"e" = 0.1—0.15 \text{ mm}$$

$$"f" = 0.1—0.15 \text{ mm}$$

To avoid significant teeth interference between planetary gears and the ring gear, the backlash "b" and the clearances "e", "d" must satisfy the inequality

$$b > e + d \qquad (1)$$

To avoid teeth interference between a sun gear and planetary gears, the backlash "a" and the clearances "f", "d" must satisfy the inequality

$$a > f + d \qquad (2)$$

The inequalities (1) and (2) can be regarded as inequalities for determining upper limits of the clearance e between the rolling circumferences 20 and 21 as well as the clearance between the rolling circumferences 20 and 28.

The outer bigger disc part 17 of the roller 6 is larger than tooth-edge circle of the planetary gear. Optimum range of radial difference of the outer part 17 and the tooth-edge circle is from 0 module to 2 modules.

Similarly the outer rolling circumference 21 of the outer inner-cylindrical part 9 is 0 to 2 modules bigger in radius than the tooth-root circle of the ring gear 3.

The sun rolling circumference 28 is preferably 0 to 2 modules smaller than the tooth-root circle of the sun gear 1. However, three rolling circumferences 20, 21 and 28 must be able to contact and roll upon each other, when the sun gear 1 or the planetary discs 6 deviate from their exact positions.

The planetary gear assembly of this invention may be readily assembled in the following sequence of steps:

1. The main carrier disc 4a is placed upon a suitable work surface or support frame.

2. The shafts 5 are pressed into the shaft retaining holes 31.

3. Rollers 6 of one side and the associated cylindrical planetary gear rings 7 are then fitted about the shafts 5.

4. The ring gear 3 is then pushed on and engaged with the planetary gear 2.

5. The second roller 6 of the opposite side of each planetary gear is then mounted on shaft 5.

6. Sub carrier disc 4b is fitted to the main carrier 4a with the shaft accommodating recesses 31 engaging the upstanding ends of planetary shaft 5. Plug parts 11 are then inserted into the socket holes 13.

7. The plug parts 11 are then secured or flattened and the epicyclic gear assembly is then ready for mounting in its operative location.

It will be appreciated that as this gear assembly is composed of fewer components than an assembly of the pitched circle disc type, the number of steps to assemble it is also correspondingly fewer.

In operation the ring gear 3 may be secured into a housing by means of bolts passing through holes 33 in the periphery of the ring gear assembly and the carrier 4 and sun gear 3 may be mated with their appropriate shafts for rotation therewith.

In the embodiment described above, even if the casing has size errors, teeth interference is substantially reduced or eliminated. Even if the input shaft and the output shaft are not precisely coaxial or colinear, radial forces transmitted by the sun gear, planetary gears and ring gears are taken up by the roller 6. The cooperation of the roller 6 with the surface 27 on the sun gear and the surface 21 on the ring gear serve to preserve some backlash between the gears and prevent tooth interference. This in turn results in a reduction in noise generation and an increase in the transmissive efficiency of the gear train.

The gear assembly in accordance with the present invention was compared with the gear assembly of the type described and claimed in Japanese Patent Publication No. 94656/1983. When run, the gear assembly of this prior art assembly produced the noise which was in the level of 55 to 57 phons. Besides this noise, the noise level changed in a low frequency like a hum, thus producing a very disagreeable audible sound.

Under the same operating conditions the planetary gear of the present invention generated a noise level of 55 phons and the level was constant.

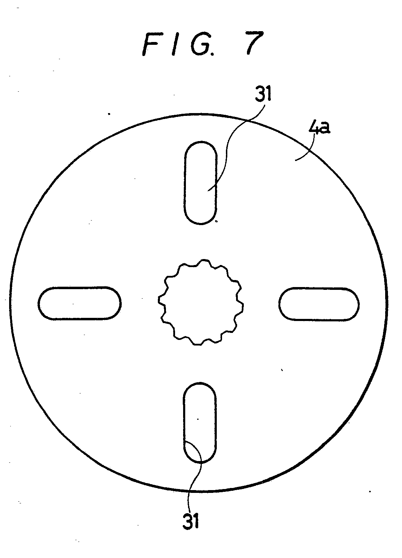

The main carrier plate illustrated in Figure 7 shows an alternative embodiment to the present invention in which the planetary shaft holes 31 are elongate grooves extending substantially radially of the carrier plate. The sub carrier plate 4b has correspondingly elongate grooves adapted to receive shafts 5, the arrangement being such that the planetary shafts can float radially with respect to the axis of rotation of the shaft carrying sun gear 1 and the displacement of the planetary shafts automatically equalises the clearances "e" and "f" and make for a more smooth rotation.

## Claims

1. An epicyclic gear assembly comprising
a sun gear (1),
a plurality of planetary gear members (2) circumferentially spaced about said sun gear (1), each of which is in geared engagement therewith,
carrier (4) means for said planetary gear members (2) and a ring gear (3) in the form of an annulus having a ring of gear teeth (8) on an inner circumferential surface thereof adapted to engage with each of said planetary gear members (2),
wherein each planetary gear member (2) has a cylindrical gear member (7) a pair of roller elements (6) which are separate from, and which rotate freely with respect to the planetary gear members, said elements being adapted to engage with a roller contacting surface (21) and (28) on the sun gear (1) and/or the ring gear (3) to limit the depth of enmeshment between the teeth thereof and in that each roller element (6) has a diameter not less than the tooth edge circle of the cylindrical gear member (7).

2. An assembly as claimed in claim 1 characterised in that the ring gear (3) has a pair of spaced roller contacting surfaces (21) disposed one on each side of the ring of gear teeth (8), the diameter of each roller receiving surface being greater than the tooth root circle of said ring of gear teeth.

3. An assembly as claimed in claim 1 or claim 2 characterised in that the sun gear (1) has a pair of spaced roller contacting surfaces (27) disposed one on each side of the gear teeth (26) thereon, the diameter of each such surface being less than the tooth root circle of the gear teeth on said sun gear.

4. An assembly as claimed in any preceding claim characterised in that the diameters of each of the roller contacting surfaces (21) of the ring gear (3) are substantially the same.

5. An assembly as claimed in any preceding claim characterised in that the diameters of each of the roller contacting surfaces (27) on the sun gear are substantially identical.

6. An assembly as claimed in any preceding claim characterised in that the radius of the roller elements (6) associated with each planetary gear member (2) is 0 to 2 modules greater than the radius of the tooth-edge circle of the said planetary gear member, the radius of the roller contacting surfaces (21) of the ring gear (3) are each 0 to 2 modules larger than the tooth-root circle of the said ring gear, and the radius of the roller contacting surfaces (27) of the sun gear (1) is 0 to 2 modules smaller than the tooth-root circle of said sun gear.

7. An assembly as claimed in any preceding claim characterised in that the sun gear (1), the planetary gear members (2) and associated roller elements are made from sintered alloy, the carrier means (4) is made by aluminium die casting and the ring gear (3) is integrally formed by plastic injection molding.

8. An assembly as claimed in any one of claims 1 to 6 characterised in that the sun gear (1), the planetary gear members (2) and the rollers associated with said planetary gear members and the ring gear are made from a plastics material.

9. An assembly as claimed in any one of claims 1 to 6 characterised in that the sun gear (1), the planetary gear members (2), the ring gear (3) and the carrier (4) are each made from a metal.

10. An assembly as claimed in any preceding claim characterised in that each planetary gear member (2) has a cylindrical portion and in that each associated roller member (6) has a boss portion (18) which is accommodated within said cylindrical portion so that the roller members (6) carry said gear member (3) either for rotation therewith or for rotation relative thereto.

## Patentansprüche

1. Umlaufgetriebe mit
— einem Sonnenzahnrad (1),
— einer Mehrzahl damit kämmender Planetenzahnradglieder (2), die längs des Umfangs des Sonnenzahnrades (1) in gegenseitigem Abstand voneinander angeordnet sind,
— einer Trägereinrichtung (4) für die Planetenzahnradglieder (2) und
— einem Ringzahnrad (3) in Form eines Ringes mit einem Verzahnungsring (8) auf der Innenseite für einen Eingriff mit jedem der Planetenzahnradglieder (8), wobei
— jedes Planetenzahnradglied (2) ein zylindrisches Zahnradglied (7) und ein Paar Rollelemente (6) aufweist, die von den Planetenzahnradgliedern getrennt sind und sich gegenüber diesen frei drehen,

— die Elemente (6) dafür ausgelegt sind, mit einer Rollengegenfläche (28 bzw. 21) auf dem Sonnenzahnrad (1) und/oder dem Ringzahnrad (3) in Eingriff zu treten, um die Kämmtiefe zwischen deren Verzahnungen zu begrenzen, und

— jedes Rollelement (6) einen Durchmesser besitzt, der nicht kleiner ist als der Zahnspitzenkreis des zylindrischen Zahnradgliedes (7).

2. Getriebe wie in Anspruch 1 beansprucht, dadurch gekennzeichnet, daß

— das Ringzahnrad (3) ein Paar beabstandeter Rollengegenflächen (21) besitzt, und zwar je eine auf jeder Seite des Verzahnungsringes (8), und

— der Durchmesser jeder Rollengegenfläche größer ist als der Zahnwurzelkreis der Verzehnungsringes.

3. Getriebe wie in Anspruch 1 oder 2 beansprucht, dadurch gekennzeichnet, daß

— das Sonnenzahnrad (1) ein Paar beabstandeter Rollengegenflächen (27) besitzt, und zwar je eine auf jeder Seite seiner Verzahnung (26), und

— der Durchmesser jeder dieser Rollengegenflächen kleiner ist als der Zahnwurzelkreis der Verzahnung auf dem Sonnenzahnrad.

4. Getriebe wie in einem der vorstehenden Ansprüche beansprucht, dadurch gekennzeichnet, daß

— die Durchmesser jeder Rollengegenfläche (21) des Ringzahnrades (3) im wesentlichen die selben sind.

5. Getriebe wie in einem der vorstehenden Ansprüche beansprucht, dadurch gekennzeichnet, daß

— die Durchmesser jeder Rollengegenfläche (27) auf dem Sonnenzahnrad im wesentlichen identisch sind.

6. Getriebe wie in einem der vorstehenden Ansprüche beansprucht, dadurch gekennzeichnet, daß

— der Radius der Rollenelemente (6), die jedem Planetenzahnradglied (2) zugeordnet sind, um 0 bis 2 Moduln größer ist als der Radius des Zahnspitzenkreises des Planetenzahnradgliedes,

— der Radius der Rollengegenflächen (21) des Ringzahnrades (3) je um 0 bis 2 Moduln größer ist als der Zahnwurzelkreis des Ringzahnrades und

— der Radius des Rollengegenflächen (27) des Sonnenzahnrades (1) um 0 bis 2 Moduln kleiner ist als der Zahnwurzelkreis des Sonnenzahnrades.

7. Getriebe wie in einem der vorstehenden Ansprüche beansprucht, dadurch gekennzeichnet, daß

— das Sonnenzahnrad (1), die Planetenzahnradglieder (2) und zugeordnete Rollenelemente aus einer Sinterlegierung hergestellt sind,

— die Trägereinrichtung (4) durch Aluminiumformguß hergestellt ist und

— das Ringzahnrad (3) als einteiliges Kunststoffspritzgußteil ausgebildet ist.

8. Getriebe wie in einem der Ansprüche 1 bis 6 beansprucht, dadurch gekennzeichnet, daß

— das Sonnenzahnrad (1), die Planetenzahnradglieder (2), die diesen zugeordneten Rollen und das Ringzahnrad aus einem Kunststoffmaterial hergestellt sind.

9. Getriebe wie in einem der Ansprüche 1 bis 6 beansprucht, dadurch gekennzeichnet, daß

— das Sonnenzahnrad (1), die Planetenzahnradglieder (2), das Ringzahnrad (3) und der Träger (4) je aus einem Metall hergestellt sind.

10. Getriebe wie in einem der vorstehenden Ansprüche beansprucht, dadurch gekennzeichnet, daß

— jedes Planetenzahnradglied (2) einen zylindrischen Teil aufweist und

— jedes zugeordnete Rollenelement (6) einen Nabenteil (18) besitzt, der in den zylindrischen Teil eingepaßt ist derart, daß die Rollenelemente das Ringzahnrad (3) entweder zur Drehung damit oder zur Drehung hiergegen tragen.

**Revendications**

1. Ensemble d'engrenages épicycloïdal comportant:
une roue solaire (1),
une pluralité d'éléments d'engrenages planétaires (2) espacés circonférentiellement autour de ladite roue solaire (1), chacun d'entre eux étant en relation d'engrènement avec celle-ci,
des moyens de support (4) pour lesdits éléments d'engrenages planétaires (2) et une couronne de train planétaire (3) sous la forme d'un anneau possédant un anneau de dents d'engrenages (8) sur une surface circonférentielle intérieure de celui-ci, adapté pour s'engrener avec chacun desdits éléments d'engrenages planétaires (2),
dans lequel chaque élément d'engrenage planétaire (2) possède un élément d'engrenage cylindrique (7), deux éléments de galets (6) qui sont séparés des éléments d'engrenages planétaires et qui tournent librement par rapport à ceux-ci, lesdits éléments étant adaptés pour s'engrener avec une surface de contact avec les galets (21) et (28) sur la roue solaire (1) et/ou sur la couronne de train planétaire (3) afin de limiter la profondeur de l'engrènement entre les dents de ceux-ci et dans lequel chaque élément de galet (6) a un diamètre qui n'est pas inférieur au cercle de rebords de dents de l'élément d'engrenage cylindrique (7).

2. Ensemble selon la revendication 1 caractérisé en ce que la couronne de train planétaire (3) possède deux surfaces de contact avec les galets espacées (21) disposées chacune sur chaque côté de l'anneau de dents d'engrenage (8), le diamètre de chaque surface recevant les galets étant supérieur au cercle de racines de dents dudit anneau de dents d'engrenage.

3. Ensemble selon la revendication 1 ou la revendication 2, caractérisé en ce que la roue solaire (1) possède deux surfaces de contact avec les galets espacées (27) disposées chacune de chaque côté des dents d'engrenage (26) de celle-ci, le diamètre de chacune de ces surfaces étant inférieur au cercle de racines de dents des dent d'engrenages sur ladite roue solaire.

4. Ensemble selon l'une quelconque des revendications précédentes, caractérisé en ce que les diamètres de chacune des surfaces de contact avec les galets (21) de la couronne de train planétaire (3) sont sensiblement les mêmes.

5. Ensemble selon l'une quelconque des revendications précédentes, caractérisé en ce que les diamètres de chacune des surfaces de contact avec les galets (27) sur la roue solaire sont sensiblement identiques.

6. Ensemble selon l'une quelconque des revendications précédentes, caractérisé en ce que le rayon des éléments de galets (6) associés à chaque élément d'engrenage planétaire (2) est supérieur de 0 à 2 modules au rayon du cercle de rebords de dents dudit élément d'engrenage planétaire, les rayons des surfaces de contact avec les galets (21) de la couronne de train planétaire (3) sont chacun supérieurs de 0 à 2 modules au cercle de racines de dents de ladite couronne de train planétaire, et le rayon des surfaces de contact avec les galets (27) de la roue solaire (1) est inférieur de 0 à 2 modules au cercle de racines de dents de ladite roue solaire.

7. Ensemble selon l'une quelconque des revendications précédentes, caractérisé en ce que la roue solaire (1), les éléments d'engrenages planétaires (2) et les éléments de galets associés sont faits un en alliage fritté, les moyens de support (4) sont faits par moulage d'aluminium sous pression et la couronne de train planétaire (3) est intégralement formée par moulage de plastique par injection.

8. Ensemble selon l'une quelconque des revendications 1 à 6, caractérisé en ce que la roue solaire (1), les éléments d'engrenages planétaires (2) et les galets associés auxdits éléments d'engrenages planétaires et la couronne de train planétaire sont faits en matière plastique.

9. Ensemble selon l'une quelconque des revendications 1 à 6, caractérisé en ce que la roue solaire (1), les éléments d'engrenages planétaires (2), la couronne de train planétaire (3) et la roue porteuse (4) sont faits chacun en métal.

10. Ensemble selon l'une quelconque des revendications précédentes, caractérisé en ce que chaque élément d'engrenage planétaire (2) possède une partie cylindrique et en ce que chaque élément de galet associé (6) possède une partie saillante (18) qui est adaptée à l'intérieur de ladite partie cylindrique de telle façon que les éléments de galets (6) portent ledit élément d'engrenage (3) soit pour tourner avec celui-ci, soit pour tourner p'ar rapport à celui-ci.

FIG. 1

II-II

2

3

33

4

5

2

32

2

33

33

1

14

2

8

# F I G. 2

# F I G. 3

# F I G. 5

# F I G. 6

# FIG. 4

0 156 067

# F I G. 7